# EUROPÄISCHE PATENTSCHRIFT

(11) **EP 1 445 517 B1**
(45) Veröffentlichungstag und Bekanntmachung des Hinweises auf die Patenterteilung: **27.02.2008**
(21) Anmeldenummer: 04001839.2
(22) Anmeldetag: 28.01.2004
(51) Int. Cl.: F16H 61/40

(54) **Hydrostatischer Antrieb**
Hydrostatic transmission
Transmission hydrostatique

(30) Priorität: 07.02.2003 DE 10305134
(43) Veröffentlichungstag der Anmeldung: 11.08.2004
(73) Patentinhaber: Brueninghaus Hydromatik GmbH, 89275 Elchingen (DE)
(72) Erfinder: Essig, Heinz-Gerhard, 89173 Lonsee (DE)
(74) Vertreter: Körfer, Thomas

(56) Entgegenhaltungen:
- DE-A- 2 550 167
- DE-B- 1 450 761
- US-A- 3 932 992
- US-A- 4 779 417
- US-B1- 6 430 923
- PATENT ABSTRACTS OF JAPAN Bd. 0112, Nr. 47 (M-615), 12. August 1987 (1987-08-12) & JP 62 055271 A (HITACHI CONSTR MACH CO LTD), 10. März 1987 (1987-03-10)
- "Spül- und Speiseventil SV RD 95 521/12.98" Dezember 1998 (1998-12), REXROTH BOSCH GROUP , XP007903165 * das ganze Dokument *

## Beschreibung

Die Erfindung betrifft einen hydrostatischen Antrieb.

Hydrostatische Antriebe, bei denen über eine Brennkraftmaschine, die im Regelfall eine Dieselmaschine ist, eine Pumpeneinheit angetrieben wird, sind bekannt. Eine Hydropumpe der Pumpeneinheit wird dabei über eine Antriebswelle angetrieben und fördert ein Druckmittel in einen hydraulischen Kreislauf. Hierzu ist die Pumpeneinheit mit zwei Arbeitsleitungen verbunden, von denen eine mit der Förderseite und die zweite mit der Saugseite der Pumpe verbunden ist.

Auf Grund der hohen Leistungen, die mit solchen Antriebssystemen erreichbar sind, werden sowohl die Pumpeneinheit als auch das in dem hydraulischen Kreislauf geförderte Druckmittel während des Betriebs eines solchen Fahrantriebs sehr stark erwärmt. Um eine zu große Erhitzung sowohl des Druckmittels, als auch der Pumpeneinheit zu verhindern, ist daher beispielsweise in einem Datenblatt der Firma BRUENINGHAUS HYDROMATIK GmbH (RD 95 512/12.98), das die Merkmale des Oberbegriffs des Anspruchs 1 enthält, vorgeschlagen, über ein externes Spülund Speisedruckventil eine definierte Druckmittelmenge aus dem hydraulischen Kreislauf zu entnehmen und durch eine gekühlte, einem Tankvolumen entnommene Druckmittelmenge zu ersetzen. Hierzu ist ein Tankvolumen mit der Saugseite einer Hilfspumpe verbunden, wobei die Hilfspumpe das angesaugte, kalte Druckmittel über Speiseventileinheiten in den hydraulischen Kreislauf fördert. Die Hilfspumpe besteht dabei im Regelfall aus einer direkt an die Pumpeneinheit angeflanschten Kolbenmaschine, welche lediglich für den Betrieb in einer Förderrichtung ausgelegt ist und die zudem ein konstantes Fördervolumen aufweist. Zur Begrenzung des durch die Hilfspumpe erzeugten Speisedrucks ist in der Pumpeneinheit ein Speisedruckbegrenzungsventil angeordnet, welches einen Speisekanal bei Überschreiten eines Druckschwellwerts durch den von der Hilfspumpe erzeugten Druck mit einem Gehäusetankvolumen der Pumpeneinheit verbindet.

Nachteilig ist dabei, dass eine Einstellung der Spülölmenge nicht erfolgt. Vielmehr wird oberhalb einer bestimmten Druckgrenze der Speisekanal einfach mit dem Gehäusetankvolumen verbunden. Die Druckbegrenzung und das Erzeugen eines Spülölstroms sind zwingend aneinander gekoppelt.

Bei einem Fahrantrieb, bei dem mehrere Pumpeneinheiten verwendet werden, ergibt sich dabei insbesondere der Nachteil, dass für jede der verwendeten Pumpeneinheiten eine eigene Hilfspumpe vorgesehen ist. Die Kühlung der Pumpeneinheiten erfolgt dabei über das in das Gehäusetankvolumen geförderte Druckmittel, sofern das Speisedruckbegrenzungsventil geöffnet ist.

Die Entnahme einer bestimmten Druckmittelmenge aus einer der Arbeitsleitungen erfolgt dagegen über das Spül- und Speisedruckventil außerhalb der Pumpeneinheit, wobei diese außerhalb der Pumpeneinheit entnommene Druckmittelmenge direkt in das Tankvolumen außerhalb der Pumpeneinheit gefördert wird, so dass eine Kühlung der Pumpeneinheit dabei nicht erfolgt.

Der Erfindung liegt die Aufgabe zugrunde, einen hydrostatischen Antrieb zu schaffen, dessen Pumpeneinheit durch eine definierte Spülölmenge gekühlt wird, wobei die Erzeugung des Spülölstroms von der Druckbegrenzung des Speisedrucks entkoppelt ist.

Die Aufgabe wird durch den erfindungsgemäßen hydrostatischen Antrieb mit den Merkmalen des kennzeichnenden Teils des Anspruchs 1 gelöst.

Der erfindungsgemäße hydrostatische Antrieb umfasst eine Pumpeneinheit, die in einem hydraulischen Kreislauf angeordnet ist und eine Hilfspumpe. Die Hilfspumpe dient zum Einspeisen eines Druckmittels in den hydraulischen Kreislauf. Hierzu wird von der Hilfspumpe ein Speisedruck in einer Speisedruckleitung erzeugt und der so erzeugte Speisedruck begrenzt, indem die Speisedruckleitung bei Überschreiten eines ersten Druckschwellwerts mit einem Tankvolumen verbunden wird. Dieser nach oben begrenzte Speisedruck wird der Pumpeneinheit über einen Speisekanal, der mit der Speisedruckleitung verbunden ist, zugeführt. In der Pumpeneinheit wird ein Spülölstrom in ein Gehäusetankvolumen der Pumpeneinheit erzeugt, der der Kühlung der Pumpeneinheit dient. Hierzu wird der Speisekanal mit dem Gehäusetankvolumen verbunden, wenn der in dem Speisekanal herrschende Druck einen zweiten Druckschwellwert überschreitet, der gegenüber dem ersten Druckschwellwert niedriger ist.

Daraus ergibt sich der Vorteil, dass durch die Hilfspumpe ein nach oben begrenzter Speisedruck erzeugt wird, welcher auch weiteren beispielsweise über ein Verteilergetriebe durch eine Brennkraftmaschine angetriebenen Pumpeneinheiten zugeführt werden kann. Zur Kühlung der Pumpeneinheit wird dann aus dem Speisekanal Druckmittel entnommen, welches von der Hilfspumpe aus einem Tankvolumen angesaugt wird. Dieses kühle, von der Hilfspumpe geförderte Druckmittel, welches über den Speisekanal der Pumpeneinheit zugeführt wird, wird dann zumindest teilweise in ein internes Gehäusetankvolumen der Pumpeneinheit gefördert, wenn der in dem Speisekanal herrschende Druck oberhalb eines zweiten Druckschwellwerts liegt. Dabei lässt sich bei mehreren gemeinsam aus einer Speisedruckleitung mit einem Druckmittel befüllten Pumpeneinheiten erreichen, dass jede. Pumpeneinheit durch eine individuell zugemessene Spülmenge gespült und damit auch individuell gekühlt wird.

Weiterhin ist es vorteilhaft, dass das Spülen nur oberhalb eines zweiten, gegenüber dem ersten Druckschwellwert niedrigeren Druckschwellwerts stattfindet, so dass bei einem Absinken des Drucks in dem Speisekanal die Spülmenge auf Null reduziert wird und damit das gesamte von der Hilfspumpe geförderte Druckmittel zum Einspeisen in den hydraulischen Kreislauf zur Verfügung steht.

Die Unteransprüche betreffen vorteilhafte Weiterbildungen des erfindungsgemäßen hydrostatischen Antriebs.

Insbesondere ist es vorteilhaft, das Gehäusetankvolumen, in welches das Spülöl strömt, mit dem Tankvolumen zu verbinden, welches außerhalb der Pumpeneinheit angeordnet ist. An dieses Tankvolumen können gemeinsam die Gehäusetankvolumen mehrerer Pumpeneinheiten angeschlossen sein. Die Hilfspumpe entnimmt aus diesem Tankvolumen das in die Speisedruckleitung zu fördernde Druckmittel. Durch das Verbinden des Tankvolumens mit dem oder den Gehäusetankvolumen wird das zur Spülung der Pumpeneinheit verwendete Druckmittel weiter abgekühlt, so dass es bei erneutem Eintreten in den hydraulischen Kreislauf bzw. das Gehäusetankvolumen ein deutlich reduziertes Temperaturniveau aufweist und damit eine effiziente Kühlung ermöglicht.

Weiterhin ist es vorteilhaft, dass zumindest eine Pumpeneinheit und die Hilfspumpe über ein Verteilergetriebe angetrieben werden. Das Verteilergetriebe ermöglicht dabei die Anpassung der Drehzahlen der Pumpeneinheit und der Hilfspumpe, so dass beide während des Betriebs in einem für sie günstigen Drehzahlbereich betrieben werden können. Das Verteilergetriebe bietet dabei auch die Möglichkeit mehrere Pumpeneinheiten zu betreiben, und diese bei entsprechender Wahl der Übersetzungsverhältnisse durch eine gemeinsame Hilfspumpe mit Druckmittel zu versorgen. Die Verwendung eines solchen Verteilergetriebes reduziert dabei nicht nur die Kosten zum Herstellen des hydrostatischen Antriebs aufgrund des entfallenden zusätzlichen Antriebsmotors, sondern begünstigt gleichzeitig auch eine Ausführung mit geringerem Platzbedarf, wobei sich der verringerte Platzbedarf nicht nur durch die Verwendung eines gemeinsamen Antriebsmotors, sondern vor allem auch durch lediglich eine, gemeinsame Hilfspumpe ergibt.

Bei der Verwendung von mehreren Pumpeneinheiten, welche über das Verteilergetriebe angetrieben werden, ist besonders vorteilhaft, dass die jeweiligen Drosselstellen der Pumpeneinheiten entsprechend den jeweils erforderlichen Kühlleistungen angepasst sein können. Über unterschiedlich große Drosselstellen kann damit der jeweilige Spülölstrom einer Pumpeneinheit angepasst werden, so dass die Pumpeneinheit in einem für sie günstigen Temperaturbereich arbeiten kann. Durch Anpassen der Temperaturbereiche, in denen die jeweiligen Pumpeneinheiten arbeiten, wird verhindert, dass sich der Wirkungsgrad bei einer der Pumpeneinheiten überproportional verschlechtert, weil beispielsweise die Verluste in dem hydraulischen Kreislauf der entsprechenden Pumpeneinheit ansteigen.

Ein bevorzugtes Ausführungsbeispiel des erfindungsgemäßen hydrostatischen Antriebs ist in der Zeichnung dargestellt und wird anhand der nachfolgenden Beschreibung näher erläutert. Es zeigt:
- Fig. 1: ein erstes Ausführungsbeispiel eines erfindungsgemäßen hydrostatischen Antriebs mit zwei Pumpeneinheiten und
- Fig. 2: ein zweites Ausführungsbeispiel eines erfindungsgemäßen hydrostatischen Antriebs mit zwei Pumpeneinheiten.

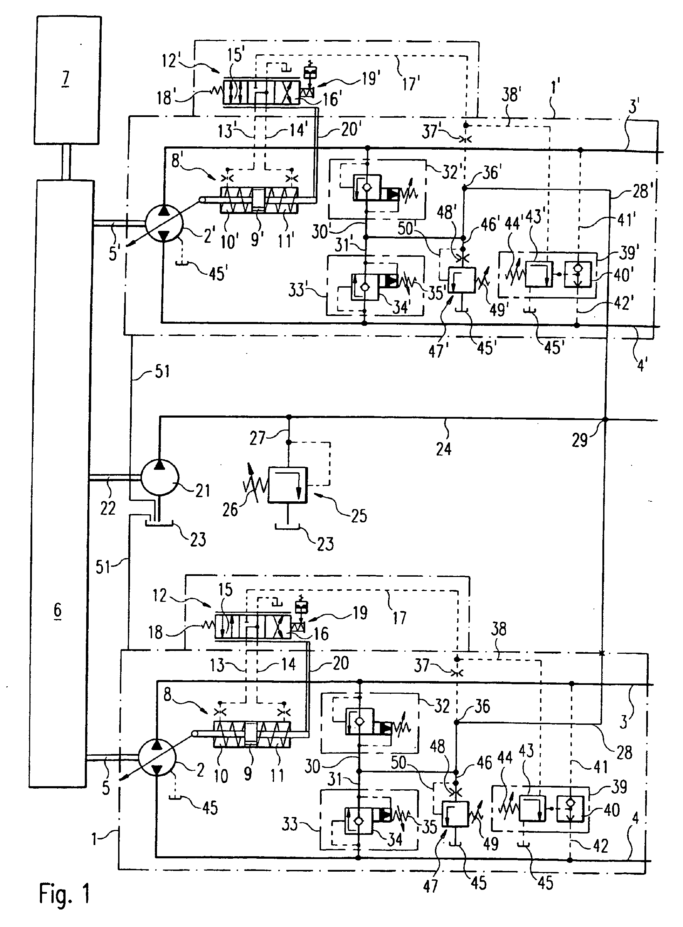

In Fig. 1 ist ein hydraulischer Schaltplan einer Pumpeneinheit 1 dargestellt. Die Pumpeneinheit 1 umfasst eine Hydropumpe 2, welche zur Förderung in zwei Richtungen ausgelegt ist. Die Hydropumpe 2 ist an eine erste Arbeitsleitung 3 und an eine zweite Arbeitsleitung 4 angeschlossen, wobei die erste und zweite Arbeitsleitung 3 und 4 einen hydraulischen Kreislauf bilden.

Die Hydropumpe 2 der Pumpeneinheit 1 wird über eine Antriebswelle 5 angetrieben, wobei die Antriebswelle 5 die Hydropumpe 2 mit einem Verteilergetriebe 6 verbindet. Das Verteilergetriebe 6 ist eingangsseitig mit einem Antriebsmotor 7 verbunden, wobei durch das Verteilergetriebe 6 bei Verwendung eines geeigneten Übersetzungsverhältnisses die Drehzahl des Antriebsmotors 7 und der Pumpeneinheit 2 aneinander angepasst werden können.

Die Hydropumpe 2 der Pumpeneinheit 1 ist für eine Förderung in zwei Richtungen ausgelegt, wobei in jeder der beiden Richtungen das Fördervolumen einstellbar ist. Hierzu ist mit dem Stellmechanismus der Hydropumpe 2 eine Verstellvorrichtung 8 verbunden. Die Verstellvorrichtung 8 umfasst einen Stellkolben 9, der in einem Zylinder angeordnet ist, wobei die entgegengesetzt gerichteten Kolbenflächen des Stellkolbens 9 in einem ersten Stelldruckraum 10 und einem zweiten Stelldruckraum 11 jeweils mit einer hydraulischen Kraft beaufschlagbar sind. In dem ersten Stelldruckraum 10 und dem zweiten Stelldruckraum 11 ist zudem jeweils eine Zentrierfeder angeordnet, welche den Stellkolben 9 in Richtung einer Mittelstellung bewegen, sofern in dem ersten und zweiten Stelldruckraum 10 und 11 gleiche Druckverhältnisse herrschen.

Befindet sich der Stellkolben 9 in seiner Mittelstellung, so ist die Hydropumpe 2 auf ein Fördervolumen "Null" gestellt. Wird durch Einstellen unterschiedlicher Drücke in dem ersten Stelldruckraum 10 und dem zweiten Stelldruckraum 11 der Stellkolben 9 aus seiner Mittelstellung ausgelenkt, so wird je nach Richtung der auf den Stellkolben 9 wirkenden resultierenden Kraft das Druckmittel des hydraulischen Kreislaufs durch die Hydropumpe 2 entweder in die erste Arbeitsleitung 3 oder in die zweite Arbeitsleitung 4 gefördert.

Der in dem ersten Stelldruckraum 10 und dem zweiten Stelldruckraum 11 herrschende Stelldruck wird durch ein Stelldruckregelventil 12 geregelt. Das Stelldruckregelventil 12 ist hierzu über eine erste Stelldruckleitung 13 mit dem ersten Stelldruckraum 10 verbunden, wobei zum Verhindern zu großer Stellgeschwindigkeiten des Stellkolbens 9 in der ersten Stelldruckleitung 13 eine Drossel angeordnet ist. Zum Einstellen des Stelldrucks in dem zweiten Stelldruckraum 11 ist das Stelldruckregelventil 12 über eine zweite Stelldruckleitung 14, die ebenfalls gedrosselt ist, mit dem zweiten Stelldruckraum 11 verbunden. Das Stelldruckregelventil 12 ist aus einer Neutralstellung heraus in Richtung einer ersten Endposition 15 bzw. einer zweiten Endposition 16 verstellbar. In der ersten Endposition 15 des Stelldruckregelventils 12 ist die erste Stelldruckleitung 13 mit einer Stelldruckspeiseleitung 17 verbunden, so dass der erste Stelldruckraum 10 aus der Stelldruckspeiseleitung 17 mit dem darin herrschenden Druck bedrückt wird. Gleichzeitig ist in der ersten Endposition 15 des Stelldruckregelventils 12 die zweite Stelldruckleitung 14 mit einem Tankvolumen verbunden, wodurch der zweite Stelldruckraum 11 entspannt wird und auf den Stellkolben 9 eine resultierende hydraulischen Kraft wirkt, die den Stellkolben 9 in Richtung des zweiten Stelldruckraums 11 verschiebt.

Um eine Verstellung in der entgegengesetzten Richtung zu bewirken wird das Stelldruckregelventil 12 entgegen der Kraft einer Druckfeder 18 mittels eines Gegenkraftserzeugers 19 in seine zweite Endposition 16 gebracht. In dieser zweiten Endposition ist die Stelldruckspeiseleitung 17 mit dem zweiten Stelldruckraum 11 über die zweite Stelldruckleitung 14 verbunden und der erste Stelldruckraum 10 wird über die erste Stelldruckleitung 13 in das Tankvolumen entspannt. Die auf den Stellkolben 9 wirkende resultierende Kraft weist in Richtung des ersten Stelldruckraums 10. Der Gegenkraftserzeuger 19 umfasst vorzugsweise eine der Druckfeder 18 entgegengesetzt wirkenden zweite Druckfeder, sowie eine eine zusätzliche Kraft auf das Stelldruckregelventil 12 erzeugende Komponente, die beispielsweise ein Elektromagnet oder eine mit einer hydraulischen Kraft beaufschlagte Messfläche sein kann. Durch diese zusätzliche Kraft wird die Stellung des Ventils beeinflußt und damit letztlich das gewünschte Fördervolumen der Pumpeneinheit 1 vorgegeben.

Zum Einspeisen von Druckmittel in den hydraulischen Kreislauf ist eine Hilfspumpe 21 vorgesehen. Die Hilfspumpe 21 ist ebenfalls über das Verteilergetriebe 6 mittels einer Hilfspumpenantriebswelle 22 angetrieben. Über ein entsprechendes Übersetzungsverhältnis ist die Drehzahl der Hilfspumpe 21 dabei angepasst und kann insbesondere unterschiedlich zu der Drehzahl der Antriebswelle 5 der Pumpeneinheit 1 sein. Die Hilfspumpe 21 saugt aus einem Tankvolumen 23 Druckmittel an und fördert es in eine Speisedruckleitung 24. Die Hilfspumpe 21 ist lediglich zur Förderung in einer Richtung vorgesehen und kann insbesondere in ihren Fördervolumen während des Betriebs fest eingestellt sein.

Da die Hilfspumpe 21 aufgrund der fest eingestellten Fördermenge eine von der Drehzahl der Hilfspumpenantriebswelle 22 abhängige Menge Druckmittel in die Speisedruckleitung 24 fördert, muss der Speisedruck, der sich in der Speisedruckleitung 24 einstellt begrenzt werden, um bei einer zu geringen durch die hydraulischen Kreisläufe abgenommenen Druckmittelmenge der an die Speisedruckleitung 24 angeschlossenen Verbraucher sicherzustellen, dass der Speisedruck in der Speisedruckleitung 24 einen kritischen Wert nicht übersteigt. Hierzu ist an der Speisedruckleitung 24 ein Druckbegrenzungventil 25 vorgesehen, welches bei Überschreiten eines durch eine einstellbare Feder 26 festgelegten Druckschwellwerts die Speisedruckleitung 24 über eine Verbindungsleitung 27 mit dem Tankvolumen 23 verbindet. Fällt auf Grund einer nachlassenden Drehzahl oder einem Anstieg der aus der Speisedruckleitung 24 entnommenen Druckmittelmenge der Speisedruck in der Speisedruckleitung 24 unterhalb des Druckschwellwerts, der durch die einstellbare Feder 26 festgelegt wird, so schließt das Druckbegrenzungsventil 25 und unterbricht damit die Verbindung zwischen der Speisedruckleitung 24 und dem Tankvolumen 23.

Zum Einspeisen des von der Hilfspumpe 21 geförderten Druckmittels in den hydraulischen Kreislauf der Pumpeneinheit 1 weist die Pumpeneinheit 1 einen Speisekanal 28 auf, der mit der Speisedruckleitung 24 an einer Verbindungsstelle 29 verbunden ist. Der Speisekanal 28 ist über eine erste Einspeiseleitung 30 mit der ersten Arbeitsleitung 3 und über eine zweite Einspeiseleitung 31 mit der zweiten Arbeitsleitung 4 verbunden. In der ersten Einspeiseleitung 30 ist eine erste Speiseventileinheit 32 angeordnet und in der zweiten Einspeiseleitung 31 ist eine zweite Speiseventileinheit 33 angeordnet. Die zweite Speiseventileinheit 33 weist dabei ein Einspeiseventil 34 auf, welches im Regelfall den Speisekanal 28 mit der zweiten Arbeitsleitung 4 über ein in Richtung der zweiten Arbeitsleitung 4 öffnendes Rückschlagventil verbindet. Übersteigt der in der zweiten Arbeitsleitung 4 herrschende Arbeitsdruck dagegen im Ausnahmefall einen kritischen Druckwert, der durch eine Feder 35 festgelegt werden kann, so wird eine weitere Verbindung in Schließrichtung des Rückschlagventils erzeugt.

Die erste Speiseventileinheit 32 ist entsprechend der zweiten Speiseventileinheit 33 aufgebaut, so dass bei Öffnen der weiteren Verbindung der jeweiligen Speiseventileinheit 32 oder 33 die entsprechende erste oder zweite Arbeitsleitung 3 oder 4 über das Rückschlagventil der jeweils anderen Speiseventileinheit 33 oder 32 in die jeweils andere Arbeitsleitung 4 oder 3 entspannt wird. Damit wird ein kritischer Anstieg des Drucks in der förderseitigen Arbeitsleitung 3 oder 4, wie er beispielsweise bei einer plötzlich erhöhten Last entstehen kann, vermieden und der hydraulische Kreislauf vor Schäden geschützt.

Die Stelldruckspeiseleitung 17 ist mit dem Speisekanal 28 an einem Stelldruckabzweig 36 verbunden. In der Stelldruckspeiseleitung 17 ist zwischen dem Stelldruckabzweig 36 und dem Stelldruckregelventil 12 eine Drossel 37 vorgesehen. Stromabwärts der Drossel 37 zweigt von der Stelldruckspeiseleitung 17 eine Entspannungsleitung 38 ab, welche mit einer Stelldruckreduzierventileinheit 39 verbunden ist. Die Stelldruckreduzierventileinheit 39 umfasst ein Wechselventil 40, dessen beide Eingänge über eine erste Wechselventilverbindungsleitung 41 mit der ersten Arbeitsleitung 3 sowie über eine zweite Wechselventilverbindungsleitung 42 mit der zweiten Arbeitsleitung 4 verbunden sind.

Über das Wechselventil 40 wird der jeweils größere in den Arbeitsleitungen 3 oder 4 herrschende Druck ausgewählt und auf eine Messfläche eines Stelldruckbegrenzungsventils 43 übertragen. Ist die hydraulische Kraft, die auf die Messfläche des Stelldruckbegrenzungsventils 43 wirkt größer als ein Druckgrenzwert, der durch eine weitere einstellbare Feder 44 festgelegt ist, so öffnet das Stelldruckbegrenzungsventil 43 und entspannt die Stelldruckspeiseleitung 17 in ein Gehäusetankvolumen 45. Durch diese Entspannung der Stelldruckspeiseleitung 17 in das Gehäusetankvolumen 45 sinkt der in dem ersten Stelldruckraum 10 bzw. dem zweiten Stelldruckraum 11 herrschende Stelldruck ab. Der Stellkolben 9 wird dadurch durch die beiden Zentrierfedern in Richtung seiner Mittelposition verschoben, so dass das Fördervolumen der Hydropumpe 2 in Richtung "Null" verstellt wird. Eine solche Verstellung erfolgt dabei solange, bis der in der förderseitigen Arbeitsleitung 3 oder 4 herrschende Druck so klein ist, dass der Grenzwert des Stelldruckbegrenzungsventils 43 unterschritten wird. Bei Unterschreiten dieses Grenzwerts schließt das Stelldruckbegrenzungsventil 43 und das an der Hydropumpe 2 eingestellte Fördervolumen wird wieder durch das Stelldruckregelventil 12 geregelt.

Zur Kühlung der Pumpeneinheit 1 wird durch das Gehäuse der Pumpeneinheit 1, welches in seinem Inneren auch zur Aufnahme des Leckagefluid der Hydropumpe 2 das Gehäusetankvolumen 45 einschließt, ein definierter Spülstrom geleitet. Zum Erzeugen eines solchen Spülstroms wird bei Überschreiten eines zweiten, gegenüber dem ersten Druckschwellwert niedrigeren Druckschwellwerts durch den Druck in dem Speisekanal 28 eine gezielt gedrosselte Verbindung des Speisekanals 28 mit dem Gehäusetankvolumen 45 erzeugt.

Zum Erzeugen eines solchen, definierten Spülstroms zweigt von dem Speisekanal 28 eine Spülzweigleitung 46 ab. In der Spülzweigleitung 46 ist ein Speisedruckhalteventil 47 angeordnet, welches bei Überschreiten eines zweiten Druckschwellwerts eine durchströmbare Verbindung aus dem Speisekanal 28 zu dem Gehäusetankvolumen 45 hin öffnet. Dabei ist in der Spülzweigleitung 46 eine Drosselstelle 48 angeordnet, durch welche die über die Spülzweigleitung 46 in das Gehäusetankvolumen 45 strömende Spülmenge bemessen wird. Die Drosselstelle 48 ist dabei vorzugsweise stromaufwärts des Speisedruckhalteventil 47 angeordnet.

Das Speisedruckhalteventil 47 weist eine einstellbare Druckfeder 49 auf, mittels der der zweite Druckschwellwert eingestellt werden kann. Entgegengesetzt zu der Kraft der einstellbaren Druckfeder 49 wirkt auf das Speisedruckhalteventil 47 an einer Messfläche eine hydraulische Kraft, welche durch den Druck in dem Speisekanal 28 erzeugt wird. Hierzu ist eine Messdruckleitung 50 vorgesehen, welche die Messfläche des Speisedruckhalteventils 47 mit der Spülölzweigleitung 46 stromaufwärts der Drosselstelle 48 verbindet.

Durch die Verwendung des Speisedruckhalteventils 47 in der Pumpeneinheit 1 wird sichergestellt, dass eine Spülung der Pumpeneinheit 1 lediglich dann erfolgt, wenn der Druck in dem Speisekanal 28 oberhalb eines bestimmten zweiten Druckschwellwerts liegt. Damit wird sichergestellt, dass bei einem Absinken des Drucks in dem Speisekanal 28 der Speisedruckleitung 24 kein von der Hilfspumpe 21 gefördertes Druckmittel entnommen wird, welches dementsprechend dem Einspeisen in den hydraulischen Kreislauf nicht zur Verfügung stehen würde. Die Spülung der Pumpeneinheit 1 über das Gehäusetankvolumen 45 ist damit auf einen bestimmten zwischen dem ersten Druckschwellwert als oberer Druckgrenze und dem zweiten Druckschwellwert als unter Druckgrenze liegenden Bereich begrenzt. Während des Betriebs des erfindungsgemäßen hydrostatischen Antriebs wird der von der Hilfspumpe 21 erzeugte Druck in dem Speisekanal 28 der Pumpeneinheit 1 im Regelfall oberhalb des zweiten Druckschwellwerts liegen. In diesem Betriebszustand ist das Speisedruckhalteventil 47 geöffnet und zumindest ein Teil des von der Hilfspumpe 21 in die Speisedruckleitung 24 geförderten Druckmittels wird über die Drosselstelle 48 in das Gehäusetankvolumen 45 gepumpt.

Dieses von der Hilfspumpe 21 aus dem Tankvolumen 23 angesaugte Druckmittel, welches zusätzlich über einen Kühler geführt werden kann, weist eine relativ niedrige Temperatur auf und dient somit der Kühlung der Pumpeneinheit 1. Das Gehäusetankvolumen 45 ist über eine Tankverbindungsleitung 51 mit dem Tankvolumen 23 verbunden. Das in das Gehäusetankvolumen 45 eingeleitete Druckmittel erwärmt sich in der Pumpeneinheit 1 und strömt dann über die Tankverbindungsleitung 51 in das Tankvolumen 23, wo das Druckmittel die aufgenommene Wärmemenge abgibt. Die Wärmeabgabe an die Umgebung kann dabei mittels eines Ölkühlers verbessert werden, der beispielsweise in der Tankverbindungsleitung 51 vorgesehen ist. Das somit wiederum auf einem niedrigen Temperaturenniveau befindliche Druckmittel wird dann erneut von der Hilfspumpe 21 angesaugt und in die Speisedruckleitung 24 gepumpt.

Durch die Verwendung einer gemeinsamen Hilfspumpe 21 zusammen mit einem Druckbegrenzungventil 25 lässt sich für alle an das Verteilergetriebe angeschlossenen Pumpeneinheiten eine gemeinsame Versorgung mit einem Speisedruck, der über das Druckbegrenzungventil 25 bei einem maximalen, durch den ersten Druckschwellwert festgelegten Speisedruck begrenzt ist, erzeugen, wobei aus dieser gemeinsamen Druckmittelversorgung für jede Pumpeneinheit 1 einzeln eine Spülmenge in das jeweilige Gehäusetankvolumen 45 abgezweigt wird. Die jeweilige Spülmenge wird durch eine Drosselstelle 48 individuell in der jeweiligen Pumpeneinheit 1 festgelegt, wobei für verschiedene Pumpeneinheiten auch unterschiedliche Drosselquerschnitte realisiert werden können, um beispielsweise den unterschiedlichen Anforderungen der Pumpeneinheiten an ihre Kühlung zu entsprechen.

In der Fig. 1 ist ein Ausführungsbeispiel gezeigt, bei dem eine zweite Pumpeneinheit 1' dargestellt ist, welche ebenfalls über das Verteilergetriebe 6 von dem Antriebsmotor 7 angetrieben wird. Die zweite Pumpeneinheit 1' ist in dem dargestellten Ausführungsbeispiel identisch mit der Pumpeneinheit 1 aufgebaut, so dass auf eine erneute Beschreibung verzichtet werden kann. Die entsprechenden Bezugszeichen sind mit einem Apostroph' versehen. Ebensogut ist es denkbar, für. unterschiedliche Anforderungen an die Pumpeneinheiten unterschiedliche Pumpeneinheiten mit dem Verteilergetriebe 6 zu verbinden. Zur Verbindung mit der Speisedruckleitung 24 ist bei der zweiten Pumpeneinheit 1' ein entsprechender Speisekanal 28' vorgesehen, welcher mit der Speisedruckleitung 24 ebenfalls über die Verbindungsstelle 29 verbunden ist. Anstelle der einen Verbindungsstelle 29 können die Speisekanäle 28 und 28' auch an unterschiedlichen Stellen mit der Speisedruckleitung 24 verbunden werden. Die Verbindungsleitung 27 ist dabei vorzugsweise stromaufwärts sämtlicher Verbindungsstellen angeordnet, um einen möglichen Einfluss von Leitungsverlusten möglichst gering zu halten.

Die Erfindung ermöglicht gerade den Anschluß mehrerer Speisekanäle 28, 28' unterschiedlicher Pumpeneinheiten 1, 1' an einer gemeinsamen Hilfspumpe, da die Speisedruckhalteventile 47, 47' aufgrund der Drosseln 48, 49' unabhängig voneinander öffnen und schließen.

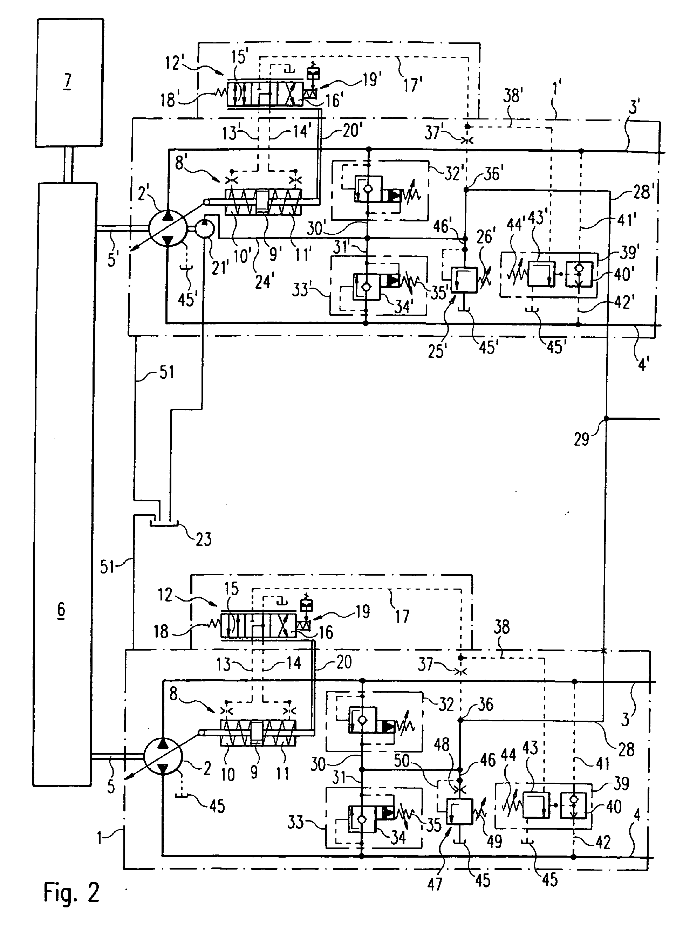

In Fig. 2 ist ein zweites Ausführungsbeispiel dargestellt, bei dem eine Hilfspumpe 21' gemeinsam mit einer Hydropumpe 2' der Pumpeneinheit 1' angetrieben wird. Die Hilfspumpe 21' fördert in eine Speisedruckleitung 24', die nun ebenfalls in der Pumpeneinheit 1' angeordnet ist. Im Unterschied zu dem Ausführungsbeispiel der Fig. 1 ist an Stelle des Speisedruckhalteventils 47' ein Druckbegrenzungsventil 25' vorgesehen, welches die Speisedruckleitung 24' bei Überschreiten eines einstellbaren Druckschwellwerts mit dem Gehäusetankvolumen 45' verbindet. Zum Einstellen des Druckschwellwerts dient wiederum eine einstellbare Feder 26'. Zum Einspeisen des Druckmittels in die Pumpeneinheit 1 ist die Speisedruckleitung 24' über den Speisekanal 28', die Verbindungsstelle 29 und den Speisekanal 28 mit der Pumpeneinheit 1 verbunden, welche identisch aufgebaut ist, wie die Pumpeneinheit 1 aus der Fig. 1.

## Patentansprüche

1. Hydrostatischer Antrieb mit zumindest einer in einem hydraulischen Kreislauf (3, 4) angeordneten Pumpeneinheit (1) und zumindest einer Hilfspumpe (21) zum Einspeisen eines Druckmittels in den hydraulischen Kreislauf (3, 4), wobei die Hilfspumpe (21) in einer Speisedruckleitung (24) einen Speisedruck erzeugt und die Speisedruckleitung (24) bei Überschreiten eines ersten Druckschwellwerts durch den Speisedruck mit einem Tankvolumen (23) verbunden ist,
**dadurch gekennzeichnet,**
**dass** ein Speisekanal (28) der zumindest einen Pumpeneinheit (1) zum Einspeisen des Druckmittels in den hydraulischen Kreislauf (3, 4) mit der Speisedruckleitung (24) verbunden ist und der Speisekanal (28) zum Erzeugen eines Spülstroms bei Überschreiten eines gegenüber dem ersten Druckschwellwert niedrigeren zweiten Druckschwellwerts in dem Speisekanal (28) über eine Drosselstelle (48) mit einem Gehäusetankvolumen (45) verbunden ist.

2. Hydrostatischer Antrieb nach Anspruch 1,
**dadurch gekennzeichnet,**
**dass** das Gehäusetankvolumen (45) mit dem Tankvolumen (23) verbunden ist.

3. Hydrostatischer Antrieb nach Anspruch 1 oder 2,
**dadurch gekennzeichnet,**
**dass** die Drosselstelle (48) stromaufwärts eines den zweiten Druckschwellwert einstellenden Spüldruckhalteventils (47) angeordnet ist.

4. Hydrostatischer Antrieb nach Anspruch 1 oder 2,
**dadurch gekennzeichnet,**
**dass** die Drosselstelle (48) stromabwärts eines den zweiten Druckschwellwert einstellenden Spüldruckhalteventils (47) angeordnet ist.

5. Hydrostatischer Antrieb nach einem der Ansprüche 1 bis 4,
**dadurch gekennzeichnet,**
**dass** die zumindest eine Pumpeneinheit (1) und die Hilfspumpe (21) über ein Verteilergetriebe (6) angetrieben sind.

6. Hydrostatischer Antrieb nach Anspruch 5,
**dadurch gekennzeichnet,**
**das**s über das Verteilergetriebe (6) eine zweite Pumpeneinheit (1') angetrieben ist,
wobei ein Speisekanal (28') der zweiten Pumpeneinheit (1') zum Einspeisen des Druckmittels in einen hydraulischen Kreislauf (3', 4') mit der Speisedruckleitung (24) verbunden ist und dieser Speisekanal (28') zum Erzeugen eines Spülstroms bei Überschreiten eines gegenüber dem ersten Druckschwellwerts niedrigeren zweiten Druckschwellenwerts in diesem Speisekanal (28') über eine Drosselstelle (48') mit dem Gehäusetankvolumen (45) verbunden ist.

7. Hydrostatischer Antrieb nach Anspruch 6,
**dadurch gekennzeichnet,**
**dass** die jeweilige Drosselstellen (48, 48') der ersten und der zweiten Pumpeneinheit (1, 1') unterschiedlich sind.

8. Hydrostatischer Antrieb nach Anspruch 6 oder 7,
**dadurch gekennzeichnet,**
**dass** der jeweilige zweite Druckschwellwert der ersten Pumpeneinheit (1) und der zweiten Pumpeneinheit (1') unterschiedlich sind.

9. Hydrostatischer Antrieb nach einem der Ansprüche 6 bis 8,
**dadurch gekennzeichnet,**
**dass** die Hilfspumpe (21) das in die Speisedruckleitung (24) zu fördernde Druckmittel aus dem Tankvolumen (23), welches mit den jeweiligen Gehäusetankvolumen (45) der Pumpeneinheiten (1, 1') verbunden ist, ansaugt.

10. Hydrostatischer Antrieb nach einem der Ansprüche 1 bis 9,
**dadurch gekennzeichnet,**
**dass** zum Erzeugen der Verbindung der Speisedruckleitung (24) mit dem Tankvolumen (23) ein Druckbegrenzungsventil (25) vorgesehen ist, welches stromaufwärts einer Verbindungsstelle (29) der Speisedruckleitung (24) mit dem zumindest einen Speisekanal (28) der zumindest einen Pumpeneinheit (1) mit der Speisedruckleitung (24) verbunden ist.

## Claims

1. Hydrostatic drive comprising at least one pump unit (1) arranged in a hydraulic circuit (3, 4) and at least one auxiliary pump (21) for feeding a hydraulic fluid into the hydraulic circuit (3, 4), the auxiliary pump (21) generating a feed pressure in a feed pressure line (24) and the feed pressure line (24) being connected to a tank volume (23) when a first pressure threshold value is exceeded by the feed pressure,
**characterised in that**
a feed channel (28) of the at least one pump unit (1) is connected to the feed pressure line (24) for feeding the hydraulic fluid into the hydraulic circuit (3, 4) and the feed channel (28) is connected to a housing tank volume (45) for generating a flushing flow when a second, lower pressure threshold value is exceeded relative to a first pressure threshold value in the feed channel (28) via a throttle point (48).

2. Hydrostatic drive according to Claim 1, **characterised in that** the housing tank volume (45) is connected to the tank volume (23).

3. Hydrostatic drive according to Claim 1 or 2, **characterised in that** the throttle point (48) is arranged upstream of a flushing pressure maintaining valve (47) adjusting the second pressure threshold value.

4. Hydrostatic drive according to Claim 1 or 2, **characterised in that** the throttle point (48) is arranged downstream of a flushing pressure maintaining valve (47) adjusting the second pressure threshold value.

5. Hydrostatic drive according to one of Claims 1 to 4, **characterised in that** the at least one pump unit (1) and the auxiliary pump (21) are driven via a power divider (6).

6. Hydrostatic drive according to Claim 5, **characterised in that** a second pump unit (1') is driven via the power divider (6), a feed channel (28') of the second pump unit (1') being connected to the feed pressure line (24) for feeding the hydraulic fluid into a hydraulic circuit (3', 4') and said feed channel (28') being connected to the housing tank volume (45) for generating a flushing flow when a second, lower pressure threshold value is exceeded relative to the first pressure threshold value in said feed channel (28') via a throttle point (48').

7. Hydrostatic drive according to Claim 6, **characterised in that** the respective throttle points (48, 48') of the first and the second pump unit (1, 1') are different.

8. Hydrostatic drive according to Claim 6 or 7, **characterised in that** the respective second pressure threshold value of the first pump unit (1) and the second pump unit (1') are different.

9. Hydrostatic drive according to one of Claims 6 to 8, **characterised in that** the auxiliary pump (21) draws in the hydraulic fluid to be delivered into the feed pressure line (24) from the tank volume (23), which is connected to the respective housing tank volume (45) of the pump units (1, 1').

10. Hydrostatic drive according to one of Claims 1 to 9, **characterised in that** for creating the connection of the feed pressure line (24) with the tank volume (23) a pressure control valve (25) is provided, which is connected to the feed pressure line (24) upstream of a connecting point (29) of the feed pressure line (24) with the at least one feed channel (28) of the at least one pump unit (1).

## Revendications

1. Transmission hydrostatique avec au moins une unité de pompe (1) disposée dans un circuit hydraulique (3, 4) et au moins une pompe auxiliaire (21) pour l'alimentation d'un agent de pression dans le circuit hydraulique (3, 4), moyennant quoi la pompe auxiliaire (21) génère une pression d'alimentation dans une conduite de pression d'alimentation (24) et la conduite de pression d'alimentation (24), en cas de dépassement d'une première valeur de seuil de pression par la pression d'alimentation, est raccordée à un volume de réservoir (23),
**caractérisée en ce que**
un canal d'alimentation (28) de la au moins une unité de pompe (1) pour l'alimentation de l'agent de pression dans le circuit hydraulique (3, 4) est raccordé à la conduite de pression d'alimentation (24), et le canal d'alimentation (28) est raccordé par l'intermédiaire d'un point d'étranglement (48) à un volume du réservoir de logement (45) pour produire un courant de lavage dans le canal d'alimentation (28) lors du dépassement d'une seconde valeur de seuil de pression plus basse que la première valeur de seuil de pression.

2. Transmission hydrostatique selon la revendication 1,
**caractérisée en ce que**
le volume du réservoir de logement (45) est raccordé au volume de réservoir (23).

3. Transmission hydrostatique selon la revendication 1 ou 2,
**caractérisée en ce que**
le point d'étranglement (48) est disposé en amont d'une soupape de retenue de pression de lavage (47) établissant la seconde valeur de seuil de pression.

4. Transmission hydrostatique selon la revendication 1 ou 2,
**caractérisée en ce que**
le point d'étranglement (48) est disposé en aval d'une soupape de retenue de pression de lavage (47) établissant la seconde valeur de seuil de pression.

5. Transmission hydrostatique selon l'une des revendications 1 à 4,
**caractérisée en ce que**
la au moins une unité de pompe (1) et la pompe auxiliaire (21) sont entraînées par un réducteur de distribution (6).

6. Transmission hydrostatique selon la revendication 5,
**caractérisée en ce que**
une seconde unité de pompe (1') est entraînée par le réducteur de distribution (6),
moyennant quoi un canal d'alimentation (28') de la seconde unité de pompe (1') pour l'alimentation de l'agent de pression dans un circuit hydraulique (3', 4') est raccordé à la conduite de pression d'alimentation (24), et ce canal d'alimentation (28') est raccordé par l'intermédiaire d'un point d'étranglement (48') au volume de réservoir de logement (45) pour produire un courant de lavage dans le canal d'alimentation (28') en cas de dépassement d'une seconde valeur de seuil de pression inférieure par rapport à la première valeur seuil de pression.

7. Transmission hydrostatique selon la revendication 6,
**caractérisée en ce que**
les points d'étranglement respectifs (48, 48') de la première et de la seconde unité de pompe (1, 1') sont différents.

8. Transmission hydrostatique selon la revendication 6 ou 7,
**caractérisée en ce que**
la seconde valeur de seuil de pression respective de la première unité de pompe (1) et de la seconde unité de pompe (1') sont différentes.

9. Transmission hydrostatique selon l'une des revendications 6 à 8,
**caractérisée en ce que**
la pompe auxiliaire (21) aspire dans la conduite de pression d'alimentation (24) l'agent de pression à acheminer à partir du volume de réservoir (23), lequel est raccordé aux volumes de réservoir de logement (45) respectifs des unités de pompe (1, 1').

10. Transmission hydrostatique selon l'une des revendications 1 à 9,
**caractérisée en ce que**
pour établir la liaison de la conduite de pression d'alimentation (24) avec le volume de réservoir (23), il est prévu une soupape de limitation de pression (25) qui est raccordée à la conduite de pression d'alimentation (24) en amont d'un point de liaison (29) de la conduite de pression d'alimentation (24) avec le au moins un canal d'alimentation (28) de la au moins une unité de pompe (1).
